# EUROPEAN PATENT APPLICATION

(11) **EP 0 883 318 A1**
(43) Date of publication of application: **09.12.1998**
(21) Application number: 97303882.1
(22) Date of filing: 05.06.1997
(51) Int. Cl.: H04Q 7/38, H04L 9/32

(54) **User authentication for roaming between mobile telecommunications networks**

(71) Applicant: ICO Services Ltd., London W6 9BN (GB)
(72) Inventor: Brand, Paul, London, SW15 6UZ (GB)
(74) Representative: Read, Matthew Charles

(57) **Abstract**

A dual mode user terminal UT 1 can roam from an IS-41 PLMN 9 to a GSM type network, comprising a satellite network, so that the satellite network can be provided as a roamed, extension of the PLMN. In order to provide end-to-end authentication, an IS-41 challenge is transmitted to the handset through the satellite network, packaged as a GSM, USSD or SMS, the resulting response produced at user terminal UT 1 is packaged as a GSM, USSD or SMS and transmitted through the satellite network to an interworking function unit 32. The AUTHR together with the challenge are transmitted to the authentication centre AC of the PLMN 9, so that end-to-end authentication can be carried out.

## Description

This invention relates to authenticating a mobile user terminal that has roamed from one telecommunications network to another and has particular but not exclusive application to authentication when roaming from an IS-41 network such as a DAMPS network, to one which uses GSM authentication techniques, such as a satellite telecommunication network.

Terrestrial mobile telecommunications systems are well known and a number of different systems have developed which operate according to different standards. These public land mobile networks (PLMNs) may operate according to analog or digital standards. In Europe, the Ear East, excluding Japan and elsewhere, the digital Global System Mobile (GSM) network has become popular, whereas in USA, networks which operate according to the IS-41 recommendations such as the Advanced Mobile Phone System (AMPS) and the Digital American Mobile Phone System (DAMPS) are used. In Japan, the Personal Handiphone System (PHS) and the Personal Digital Communication (PDC) network are in use. More recently, proposals have been made for a Universal Mobile Telecommunications System (UMTS). These networks are all cellular and land-based but have differences in architecture and use different signalling protocols and transmission frequency bands.

Considering for example the GSM system, individual cells of the mobile network are served by a series of geographically spaced, terrestrial base transceiver stations (BTSs) which are coupled through base station controllers (BSCs) to a mobile switching centre (MSC) which may provide a gateway out of the network to a conventional public switched telephone network (PSTN). The network includes a home location register (HLR) which stores information about the subscribers to the system and their user terminals. When a user terminal is switched on, it registers with the HLR and an authentication procedure is carried out. Each mobile user terminal is provided with a smart card known as a subscriber identification module (SIM) which stores two unique items of identification in order to identify the subscriber. The first item comprises an international mobile subscriber identity (IMSI) and second item comprises a secret parameter referred to in the GSM specifications as Ki. Associated with the HLR is an authentication centre (AuC) which includes data corresponding to the IMSI and Ki for each subscriber to the network. When the user terminal is switched on, and at other times, the IMSI is transmitted from the user terminal to the HLR, which then refers to the AuC in order to authenticate the user. The IMSI is checked in the memory of the AuC, and a corresponding value of Ki is retrieved. Also, a random number RAND is generated in the AuC. The random number RAND and the value of Ki are applied as inputs to an algorithm referred to in the GSM Specifications as A3 to generate a signed result SRES. The AuC also includes an algorithm referred to in the GSM Specifications as A8 which generates a secret key Kc that is used for encryption/decryption of data transmitted over the air between the user terminal and the land-based network. In practice, the algorithms A3/A8 may be constituted by a single algorithm producing a 96 bit output of which 32 bits constitute SRES and the remaining 64 bits constitute Kc. A triplet of signals comprising RAND, SRES and Kc is fed from the AuC, through the HLR to the MSC, which acts as a checking station in the authentication procedure.

The individual value of RAND is then transmitted on to the user terminal through the network from the MSC. The SIM of the user terminal has the algorithm A3/A8 stored locally, so as to generate a corresponding value of SRES' and Kc at the user terminal, from the received value of the random number RAND and the stored value of Ki in the SIM.

The value of SRES' is transmitted back through the network to the MSC and compared with the originally generated value of SRES. If they are the same, the user terminal is authenticated but otherwise registration of the user terminal with the HLR is barred.

Thereafter, if the user terminal is authenticated the MSC initiates encryption/decryption of data transmitted over the network, using an enciphering/deciphering algorithm referred to in the GSM Specifications as A5, which uses as its inputs the secret key Kc and the frame number of data transmitted through the network. The SIM of the user terminal generates its own value of the secret key Kc using its locally stored copy of the algorithm A8. The local value of Kc at the user terminal can then be used to encrypt/decrypt data transmitted, using a locally held copy of the algorithm A5.

The authentication procedure used in GSM has the advantage that only random numbers are transmitted over the air interface between the user terminal and the BTS, which minimises the risk of fraudulent registration.

For further details of the authentication procedure and subsequent data encryption/decryption, reference is directed to "The GSM System for Mobile Communications" M. Mouly & M-B. Pautet, Cell & Sys.1992 pp 477-492.

If the user terminal roams to a different GSM network, in a different geographical location, it registers with a visitor location register (VLR) of the visited network, which communicates with the HLR of the home network for billing and other purposes.

Considering now the networks which operate according to the IS-41 recommendations, a number of base stations BS are connected to a MSC/VLR, coupled to an HLR in a generally similar configuration to a GSM network. Associated with the HLR is an authentication centre AC. Each mobile hand set includes a numeric address module (NAM) which stores an individual mobile identity number (MIN) together with a secret key known as the A-key. The authentication centre AC maintains a list of the A-keys associated with the MINs for the user terminals which are registered with the network. Authentication for an IS-41 network makes use of a so-called CAVE algorithm. The CAVE algorithm makes use of so-called shared secret data SSD, which is generated from the A-key and MIN for each user terminal.

To perform authentication, initially, the authentication centre AC transmits to the user terminal, a request that the SSD is updated. The SSD is then updated both at the user terminal and at the authentication centre AC. A feature of the SSD is that it is not possible to obtain details of the A-keys from the SSD.

Then, the MIN is transmitted from the user terminal to the MSC which, in turn generates a challenge in the form of a random number RAND which is transmitted back to the user terminal. The CAVE algorithm is then run at the user terminal using the current value of SSD and RAND to produce an authorization response AUTHR, which is then transmitted back over the network to the MSC. The current value of MIN, RAND and AUTHR are transmitted through the network to the AC and the CAVE algorithm is run, using the local value of SSD and RAND received from the MSC. Thus, the value of AUTHR is produced at the AC, which can be compared with the value of AUTHR received from the user terminal. If they are the same, a successful authentication has been achieved, but if they are different, a response is sent to the MSC to cancel the registration of the user terminal from the VLR. Alternatively, the AC may be entrust the SSD to the MSC, allowing the MSC to run the CAVE algorithm using SSD and RAND and comparing the result to provide AUTHR without referring back to the AC.

Although the authentication procedure is generally similar to the procedure used in GSM, it is different in detail, and the procedures are not compatible.

Mobile telecommunication systems have been proposed that use satellite communication links between mobile user terminals and conventional terrestrial networks such as PSTNs and PLMNs. One network known as the IRIDIUM ™ satellite cellular system is described in EP-A-0365885 and US Patent No. 5 394 561 (Motorola), which makes use of a constellation of so-called low earth orbit (LEO) satellites, that have an orbital radius of 780 km. Mobile user terminals such as telephone handsets establish a link to an overhead orbiting satellite, from which a call can be directed to another satellite in the constellation and then typically to a ground station which is connected to conventional land-based networks.

Alternative schemes which make use of so-called medium earth orbit (MEO) satellite constellations have been proposed with an orbital radius in the range of 10-20,000 km and reference is directed to Walker J.G. "Satellite Patterns for Continuous Multiple Whole Earth Coverage" Royal Aircraft Establishment, pp 119-122 (1977). Reference is directed to the ICO ™ satellite cellular system described for example in GB-A-2 295 296, and to the ODYSSEY ™ satellite cellular system described in EP-A- 0 510 789. With these systems, the satellite communication link does not permit communication between adjacent satellites and instead, a signal from a mobile user terminal such as a mobile handset is directed firstly to the satellite and then directed to a ground station or satellite access node (SAN), connected to conventional land-based telephone network. This has the advantage that many components of the system are compatible with known digital terrestrial cellular technology such as GSM. Also simpler satellite communication techniques can be used than with a LEO network.

In satellite communications networks, ground stations are located at different sites around the world in order to communicate with the orbiting satellites. In the ICO™ system and others, a visitor location register is associated with each of the satellite ground stations, which maintains a record of the individual user terminals that are making use of the particular ground station.

The visitor location registers communicate with a home location register for the satellite network. User terminals are authenticated for use with the satellite network in a similar way to a conventional land based network. For example, the ICO™ system uses an authentication procedure corresponding to GSM authentication used for conventional land based GSM networks.

In certain areas of the world, coverage provided by a conventional terrestrial PLMN and the satellite network will overlap in a common area. It has been proposed that the individual mobile terminals be operable with both the PLMN and the satellite network. The user terminals may include a switch to allow the user to select the network or alternatively, an automatic selection may be made e.g. on the basis of signal strength. It is envisaged that normally, the conventional terrestrial network will be preferred for reasons of cost and signal strength but that the user will roam to the satellite network when outside of the coverage area of the PLMN. Thus, the satellite network service can be offered to subscribers by the operator of the PLMN and billing for use of the satellite service can be carried out through the facilities already in place for the PLMN.

However, a secure authentication procedure is required when the subscriber roams from the PLMN to the satellite network, to ensure that when charges for use of the satellite service are passed to the operator of the PLMN, they are accurately attributed to individual subscribers, without significant risk of fraud. A problem arises in achieving authentication when the two networks use different authentication protocols, and the invention addresses this issue.

In a first aspect, the invention provides a method of authenticating a user terminal which has roamed from a first network that uses a first authentication protocol, to a second network that uses a second, different authentication protocol, comprising: transmitting an authentication challenge to the user terminal according to the protocol of the first network, through the second network, providing a response at the user terminal to the challenge in accordance with the first authentication protocol, transmitting the response through the second network, to a checking station, and comparing the response at the checking station with corresponding authentication data for the first network according to the first protocol so as to authenticate the user terminal according to the first protocol for use with the first network.

The authentication challenge may be transmitted to the user terminal through the second network, packaged as a message in a data format pertinent to the second network.

The first network may be configured in accordance with IS-41 recommendations, and the second network may be configured in accordance with GSM recommendations in which case, the challenge and the response may be packaged as a USSD or SMS for transmission through the GSM network.

The method according to the invention may include authenticating the roamed user terminal for use with said second network in accordance with the second protocol, and only authenticating the terminal in accordance with the first protocol if the authentication according to the second protocol is successful. The authentication for the second network may include transmitting an initial authentication challenge to the user terminal according to the protocol of the second network, through the second network, providing a response at the user terminal to the challenge according to a predetermined algorithm in accordance with the second authentication protocol, transmitting the response through the second network to a checking station for the second network, and comparing the response at the checking station for the second network with authentication data according to the second protocol to authenticate the user terminal for use with the second network.

The second network may comprise a satellite network.

The invention also includes a user terminal for roaming from a first network that uses a first authentication protocol, to a second network that uses a second, different authentication protocol, comprising: a receiver to receive an authentication challenge according to the protocol of the first network, through the second network, means operative to provide a response to the challenge in accordance with the first authentication protocol, and a transmitter operative to transmit the response through the second network, for permitting the response to be compared at a remote checking station with corresponding authentication data for the first network according to the first protocol, for authenticating the user terminal according to the first protocol, for use with the first network.

The user terminal according to the invention may further include: a receiver to receive an authentication challenge according to the protocol of the second network, through the second network, means operative to provide a response to the challenge in accordance with the second authentication protocol, and a transmitter operative to transmit the response through the second network, for permitting the response to be compared at a remote checking station with corresponding authentication data for the second network according to the second protocol, for authenticating the user terminal according to the second protocol, for use with the second network

The invention further includes a user terminal operative according to GSM recommendations and IS-41 recommendations, and responsive to an IS-41 challenge packaged as a USSD or SMS, to produce a IS-41 response, transmitted as a SMS or USSD.

In accordance with the invention an interworking function unit may be provided for providing interworking between a first and second telecommunications networks operative according to a first and second different sets of recommendations with respective first and second authentication protocols, for use in authenticating a user terminal which has roamed from the first network to the second network, the unit comprising: means for routing an authentication challenge according to the protocol of the first network, towards a user terminal, through the second network; means to receive from the user terminal, through the second network, a response to the challenge in accordance with the first authentication protocol; and means for routing the response in a format in accordance with the recommendations for the first network, towards a checking station at which it is compared with corresponding authentication data for the first network according to the first protocol so as to authenticate the user terminal for use with the first network.

In order that the invention may be more fully understood, an embodiment thereof will now be described by way of example with reference to the accompanying drawings, in which:
Figure 1 is a schematic diagram of a satellite telecommunications system together with a local, land-based mobile telecommunications system, in accordance with the invention;
Figure 2 is a more detailed block diagram of the satellite network in the vicinity of SAN 1 and the associated terrestrial cellular network, for illustrating interworking;
Figure 3 is a schematic block diagram illustrating intercommunication within the satellite network;
Figure 4 is a schematic diagram of a mobile user terminal;
Figure 5 is a schematic block diagram of the circuits of the terminal shown in Figure 4;
Figure 6 is a schematic block diagram of the SIM card shown in Figures 4 and 5;
Figure 7 is a schematic block diagram of the interworking unit 32 shown in Figure 2;
Figure 8 is a schematic flow chart for convention IS-41 authentication for the PLMN 9;
Figure 9 is a flow chart of an alternative authentication procedure for the PLMN 9;
Figure 10 is a schematic flow chart of GSM-type authentication in the satellite network;
Figure 11 is a schematic general flow chart of the authentication procedure when the user terminal roams for the IS-41 network 9, to the satellite network;
Figure 12 is a schematic flow diagram of a SSD update performed in the authentication shown in Figure 11
Figure 13 is a schematic flow diagram for end-to-end authentication, performed after the SSD update of Figure 12, in accordance with the invention;
Figure 14 is a flow chart of a modified end-to-end authentication; and
Figure 15 is a schematic diagram of a USSD including an IS-41 challenge.

### Satellite Network

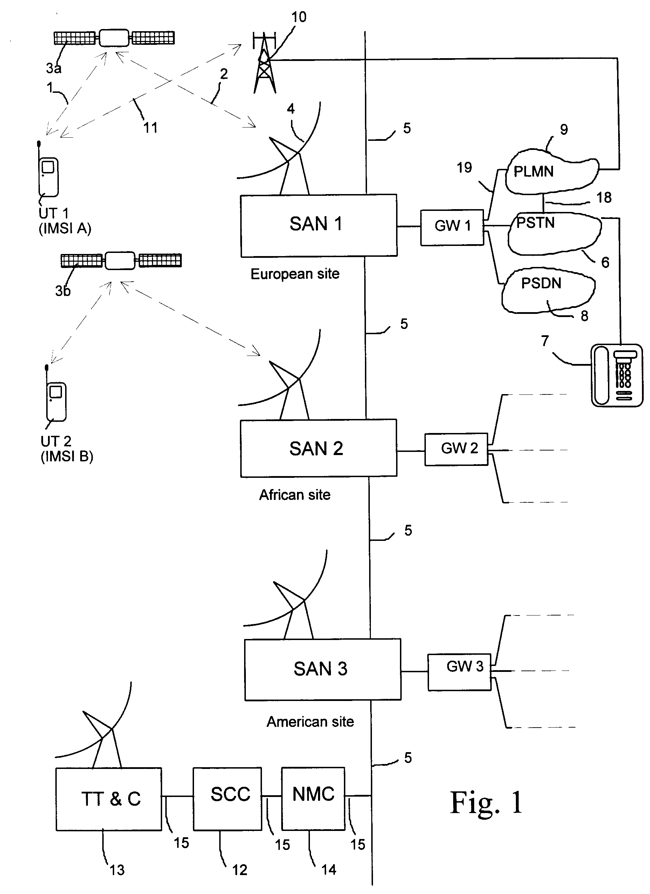

Referring to Figure 1, a schematic block diagram of a satellite mobile telecommunication network is shown corresponding generally to the ICO™ network. A mobile user terminal UT 1 in the form of a mobile telephone handset can communicate on a radio channel over a communication path 1, 2 via an earth orbiting satellite 3a with a land-based satellite access node SAN 1. As shown schematically in Figure 1, SAN 1 is provided with an antenna 4 which can track the orbiting satellite.

A number of the satellite access nodes SAN 1, 2, 3, etc are connected together to form a backbone network 5, which is connected through a number of gateways GW 1, 2, 3, etc to conventional land-based telephone networks. For example, considering the gateway GW1, it is connected to a land-based public switch telephone network (PSTN) 6, which permits connection to be made to a conventional telephone set 7. The gateway GW1 is additionally connected to a public switch data network (PSTN) 8 and a public local mobile network (PLMN) 9. Each of the gateways GW 1,2,3 may comprise commercially available mobile switching centres (MSCs) of the type used in GSM networks.

For a fuller understanding of GSM, reference is directed to the various GSM Recommendations issued by the European Telecommunications Institute (ETSI). Also reference is directed to "The GSM System for Mobile Communications" by M. Mouly and M-B. Pautet, ***supra***, for a more easily understandable synopsis

As shown in Figure 1, the handset UT 1 can also communicate with the conventional land-based mobile network PLMN 9, which is shown schematically to include a transceiver station 10 that establishes a duplex link 11 with the user terminal UT 1. In this example, the PLMN 9 is a IS-41 based network such as a D-AMPS network..

The satellite network is designed to provide worldwide coverage and the satellites 3a, 3b form part of a constellation of satellites, which may be arranged in several orbits. In one example, two orbits of five satellites are used, which can be shown to provide coverage of a major part of the surface of the earth, in which for a 10° satellite elevation angle, one satellite can be accessed by the mobile handset all of the time and two satellites can be accessed for at least 80% of the time, thereby providing system diversity. Further satellites may be included in the constellation in order to provide additional redundancy and diversity.

The satellites are typically arranged in a MEO constellation, for example with an orbital radius of 10,355 km, although the invention is not restricted to a particular orbital radius. In this embodiment, satellites 3a, 3b are shown in a common orbit and the satellites are tracked by the antenna arrangement of each SAN. Typically, each SAN includes five antennas for tracking individual satellites of the constellation. The SANs are spaced around the earth in order to provide continuous coverage. In the example shown, SAN 1 may be located in Europe whereas SAN 2 may be located in Africa, SAN 3 in America and other SANs may be located elsewhere. In Figure 1, the SAN 2 is shown communicating with user terminal UT 2 via satellite 3b. For further details of the satellite network, reference is directed to GB-A-2 295 296.

The satellites 3a, 3b are in non-geostationary orbits and comprise generally conventional satellites such as the Hughes HS 601 and may include features disclosed in GB-A-2 288 913. Each satellite 3a, 3b is arranged to generate an array of beams covering a footprint on the earth beneath the satellite, each beam including a number of different frequency channels and time slots as described in GB-A-2 293 725. The beams thus provide adjacent cellular areas which correspond to the cells of a conventional land-based mobile telephone network. The satellites are controlled by means of a satellite control centre (SSC) 12 and a tracking telemetry and control station (TT&C) 13, which are connected to a network management centre 14 through a digital network 15 that is coupled to the backbone network 5. The SSC 12 and the TT&C 13 control operation of the satellites 3a, 3b, e.g. for setting the transmission power levels and transponder input tuning, as directed by the NMC 14. Telemetry signals for the satellites 3a, 3b are received by the TT&C 13 and processed by the SSC 12 to ensure that the satellites are functioning correctly.

During a telephone call, the handset UT 1, 2 communicates with the satellite 3a, 3b via a full duplex channel comprising a down link channel and an up link channel. The channels include TDMA time slots on frequencies allocated on initiation of the call.

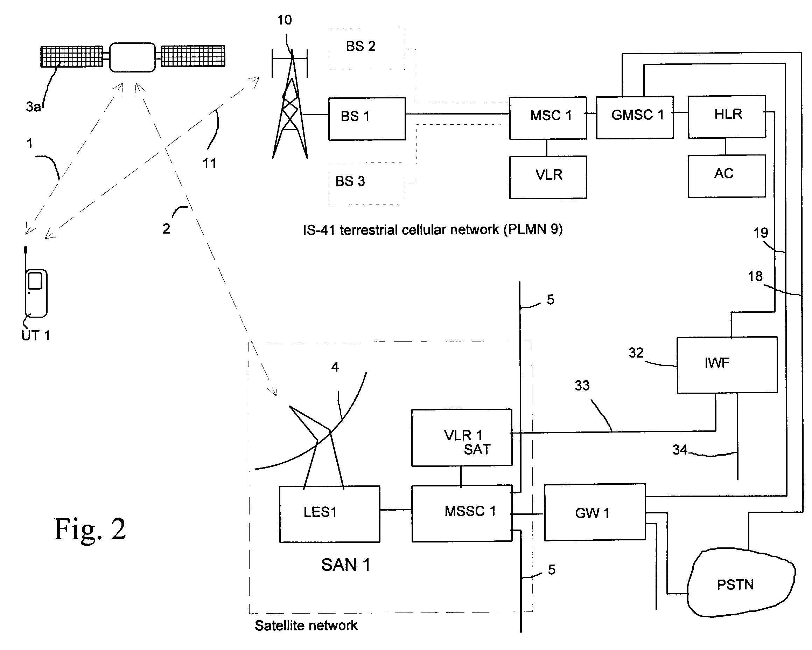

Referring to Figure 2, the configuration of SAN 1 and the local PLMN 9 is shown in more detail. SAN 1 consists of a land earth station LES 1 which is coupled to the five dish antennas 4 for tracking the satellites, the LES 1 including transmitter and receiver circuits with amplifiers, multiplexers, demultiplexer and codecs. A mobile satellite switching centre MSSC 1 is coupled to LES1 and to a satellite visitor location register VLR_{SAT}1. MSSC 1 couples communication signals (voice and packet data) to the backbone network 5 and to the LES 1, so as to allow individual telephone calls to be established through the backbone network 5 and the duplex communication link 1, 2 via the satellite 3a, to the mobile terminal UT 1. The MSSC 1 responds to addresses on incoming communication signals from the antenna 4 to route the signals appropriately to their destinations.

The VLR_{SAT}1 maintains a record of each of the subscribers, namely the IMSIs of each of the user terminals UT that are making use of the SAN 1 for signal communication.

The MSSC 1 is connected to the gateway GW1 so as to provide an output connection to PLMN 9, together with PSDN 8 and PSTN 6 shown in Figure 1. Thus, typically, the packet data will be fed to and from the PSDN 8 and voice signals will be communicated to and from the network PLMN 9 or PSTN 6. It will be understood that all the SANs are of similar construction with a respective VLR_{SAT} to maintain a record of the subscribers registered.

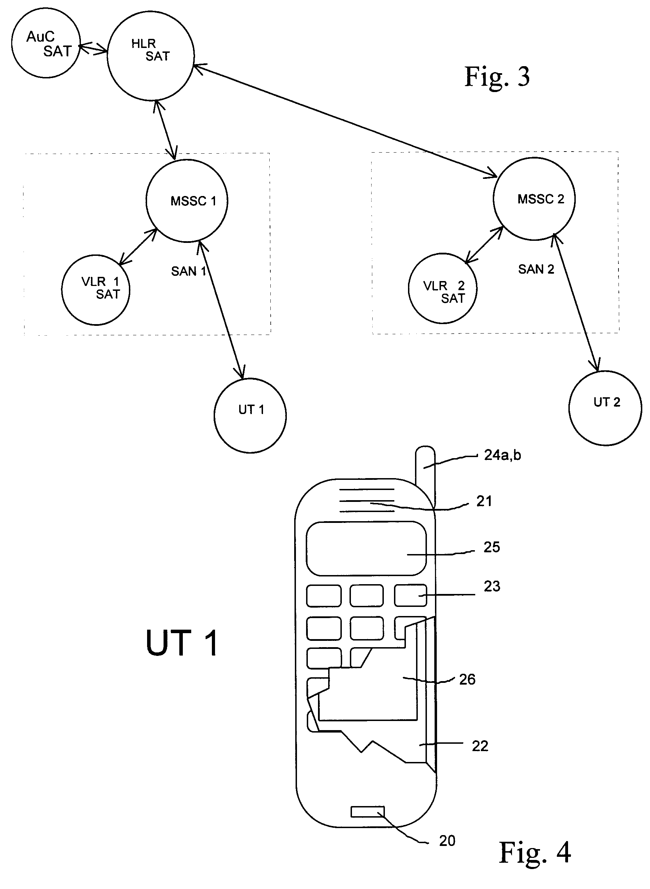

Referring to Figure 3, the satellite network also includes a database 17 referred to herein as the satellite home location register (HLR_{SAT}) that contains records relating to each mobile user terminal UT. The record includes the terminal's identity, namely, its IMSI, the geographical location of the UT, the home MSSC with which the UT is registered, so as to enable billing and other data to be collected at a single point, and the currently active SAN with which the UT is in communication via a satellite. The HLR_{SAT} 17 may be located at the NMC 14 shown in Figure 1 or may be distributed among the SANs 1, 2, 3 etc. Associated with the HLR_{SAT} 17 is an authentication centre AuC which stores the secret parameter Ki and the associated IMSI for each subscriber to the satellite network, in accordance with the GSM Recommendations in order to authenticate the subscriber for use with the satellite network.

### IS-41 Network (PLMN 9)

Referring again to Figure 2, the IS-41 mobile network 9 comprises a DAMPS network and includes a number of base transceiver stations BS 1, 2, 3 etc which are geographically spaced apart in order to support a cellular network in a manner well known ***per se***. Typically, the IS-41 network 9 has a coverage area that overlies a country or state, and thus overlaps with the global coverage of the satellite network. BS 1 is shown with an associated antenna 10, connected by a landline to a mobile switching centre MSC 1 which can route calls within the mobile network and also through a gateway GMSC 1 to a conventional PSTN over line 18, or to the satellite network, over line 19 through the gateway GW 1.

A home location register HLR for the land-based IS-41 network 9 is provided, coupled to the GMSC 1. The HLR, in a conventional manner, keeps a record of the identities of the user terminals registered for use with the network, known in the nomenclature of IS-41 as the module identity number (MIN). The PLMN 9 may also include a visitor location register VLR which maintains a record of subscribers temporarily registered with the network, that have roamed from other IS-41 networks. For example, if the PLMN 9 is sited in one geographic region of the USA e.g. California, subscribers from an IS-41 network in another geographic region e.g. New York State, may be locally registered on a temporary basis whilst in California. In a conventional manner, telephone usage information is relayed from the VLR in California through the PSTN 6 to the New York network for billing purposes.

An authentication centre AC is coupled to the HLR. The AC includes a database of secret keys, known as A keys, that are uniquely associated with the MINs of individual user terminals, together a CAVE algorithm in accordance with the IS-41 recommendations. This stored data is used to authenticate a user terminal, such as the terminal UT 1, as will be explained in more detail hereinafter.

For further details of the IS-41 recommendations, reference is directed to the textbook: Mobile Telecommunications Networking with IS-41, by M.D. Gallagher & R.A. Snyder, McGraw Hill 1997 [ISBN 0-07-063314-2].

### Mobile user terminal

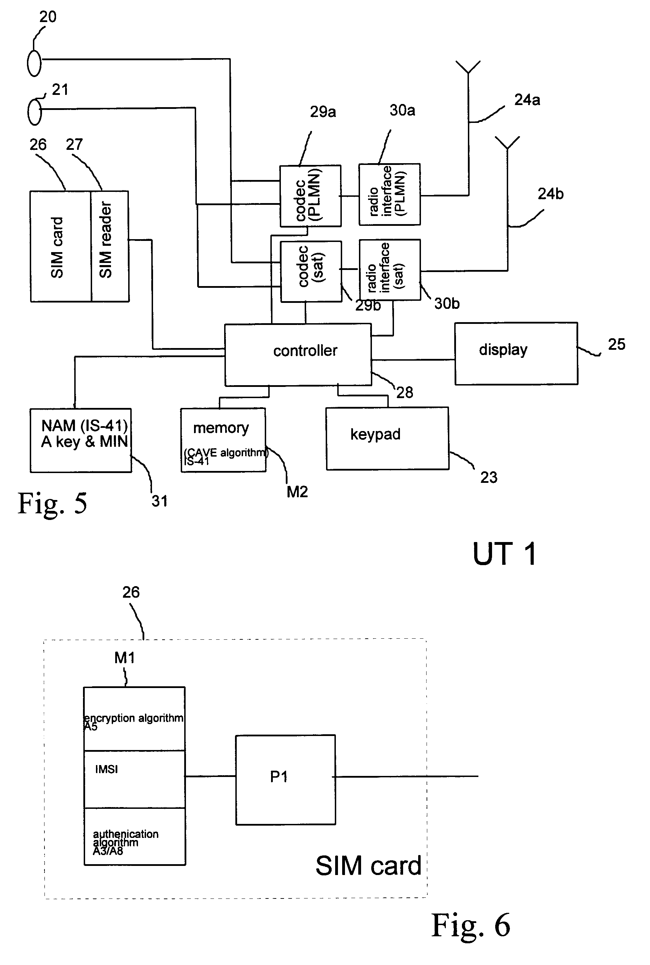

Referring to Figures 4 and 5, the mobile user terminal UT 1 is configured to operate with both the local terrestrial cellular network and the satellite network. Thus, in the example shown in Figure 2, the mobile handset UT 1 can operate either according to a land-based IS-41 protocol such as D-AMPS or according to the satellite network protocol, which generally corresponds to a GSM protocol. As shown in Figure 4, the user terminal UT 1 comprises a mobile handset which is capable of dual mode operation. It includes conventional IS-41 circuits for use with the land-based cellular network 9 together with similar, GSM type circuitry for use with the satellite network. The handset comprises a microphone 20, a speaker 21, a battery 22, a keypad 23, antennas 24a, 24b for use with the IS-41 and satellite networks respectively, and a display 25 which can be used amongst other things, for displaying messages transmitted to the terminal over the digital packet data network, via the satellite link. The handheld unit UT 1 also includes a subscriber identification module (SIM) smart card 26, primarily for use with the satellite network.

The circuit configuration of the handset UT 1 is shown in block diagrammatic form in Figure 5. The SIM card 26 is received in an SIM card reader 27 coupled to a controller 28, typically a microprocessor. The microphone and speaker 20, 21 are coupled to codecs 29a, 29b for use with the IS-41 and satellite networks respectively, coupled to respective conventional radio interfaces 30a, 30b and respective antennas 24a, 24b so as to transmit and receive communication signals, in a manner well known ***per se*** for the IS-41 and the satellite networks.

For the satellite network, the SIM card 26 includes a memory M 1, shown in Figure 6, which stores an individual IMSI together with the secret identification function Ki which is unique to the SIM, and the algorithms A3/A8 and A5 in accordance with the GSM Recommendations, for authentication purposes, as will be described later.

For the IS-41 network, the user terminal includes a numeric address module (NAM) 31 in accordance with the IS-41 recommendations, which stores the individual MIN and A key for the handset. Also, a memory M 2 associated with the controller 28, stores the CAVE algorithm, used for authentication, to be described hereinafter.

### Network selection

As described previously, the networks can be selected in a number of different ways, either automatically depending on factors such as signal strength or manually. In this example, for ease of explanation, the networks are described as being selected manually, by the use of a key on the keypad 23.

When the keypad 23 is operated to select the IS-41 network, the controller 28 selects the codec 29a and the radio interface 30a so that UT 1 operates at a frequency and according to a protocol for the land based IS-41 network 9, over the duplex link 11. When the satellite network is selected, the controller 28 selects the codec 29b and the radio interface 30b so that UT 1 operates at a frequency and according to a protocol suitable for the satellite network and communication takes place over the duplex links 1, 2 via the satellite 3a.

### Network interworking

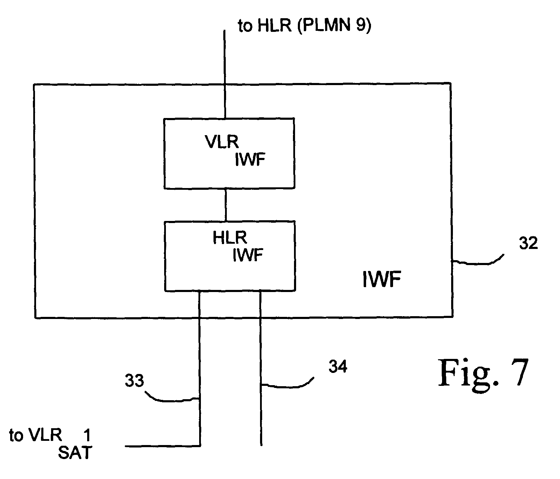

When the user terminal roams outside of the coverage area of the PLMN 9 or when it is desired to use services available through the satellite network which are not available through the IS-41 network, calls from the land based mobile network 9 are directed to the user terminal UT 1 through the satellite network. An interworking function unit (IWF) 32 shown in Figure 2 is provided for this purpose, permitting full control over the service provision between the satellite and cellular land-based networks. The IWF 32 is coupled between the HLR of the PLMN 9 and the VLRs_{SAT} of the satellite network, as shown in Figure 2. The IWF 32 is shown in more detail in Figure 7 and comprises a VLR_{IWF} connected to the HLR of PLMN 9, together with a HLR_{IWF} that is coupled to the individual VLRs_{SAT} of the satellite network. In Figure 7, the HLR_{IWF} is shown coupled to VLR_{SAT} 1 on line 33 and a schematic connection to the other VLRs_{SAT} is shown as line 34.

The HLR_{IWF} includes a database of IMSIs for subscribers to the satellite service together with corresponding MINs for the user terminals that can be used with the land-based IS-41 network 9, for use in authentication, as will be described later.

### Service Provision

The network configuration permits service providers to offer services to a subscriber in a number of different ways. One way is to provide a conventional PLMN service through the network 9 according to the IS-41 protocol. Another way is to provide a solely satellite based service, provided through the backbone network 5 and the SANs. An alternative way is to provide the satellite based service as an extension of the PLMN 9 so that the user of terminal UT 1 uses the Home PLMN 9 when in range, other PLMNs when roaming in respect of land-based networks, or alternatively the satellite network. Thus, the satellite network can allow the user terminal to be operated worldwide, outside of the range of terrestrial PLMNs, or the satellite service can provide an alternative to the PLMN when within range. These alternatives will now be discussed in more detail:

### a) Conventional PLMN service

When the mobile user terminal UT 1 is within the coverage area of the PLMN 9 shown in Figure 1, it can be operated in a conventional manner with the land-based network. The user terminal UT 1 is set, using the keypad 23 (Figure 4) so as to transmit and receive using the codec 29a and the radio interface 30a appropriate for IS-41 communication over the duplex link 11 shown in Figure 1. The user terminal UT 1 is thus registered with VLR1 of the IS-41 network shown in Figure 2. Prior to registration, a conventional IS-41 authentication procedure is carried out, as will be explained later. Calls can then be routed from the telephone set 7 shown in Figure 1, through the PSTN 6 to the PLMN 9 and hence to the user terminal UT 1, over the duplex link 11. The incoming call is routed to the HLR of the network 9 and the MIN corresponding to the telephone number for the incoming call is determined from a look-up table in the HLR. The HLR also includes a table of the user terminals currently registered with the network 9, and from this data, the call can then be routed to the relevant BTS with which the destination user UT is currently registered.

### b) Satellite Service Provision

For this mode of operation, a "stand-alone" satellite service is provided through the backbone network 5. Referring to Figure 3, the satellite service provision makes use of the satellite home location register (HLR_{SAT}) that contains records including the IMSI relating to each mobile user.

Referring again to Figure 1, when a call from telephone set 7 is to be routed through PSTN 6 to the satellite service, the satellite service network has a predetermined telephone number prefix, together with a unique telephone number for the user. The call is routed through PSTN 6 and gateway GW1 to SAN 1 in this example. The SAN 1 then queries the satellite home location register HLR_{SAT} for the currently registered location of the user i.e. the VLR_{SAT} with which the IMSI is currently registered. This operates in the same way as a GSM HLR and the IMSI corresponding to the telephone number for the incoming call is determined from a look up table in the HLR_{SAT}. Also the HLR includes a table of the current location of the user terminals currently registered with the network, this information having been fed to the HLR from the VLRs_{SAT} associated with the individual SANs. From this comparison, the call can then be routed to the relevant SAN with which the destination user UT is currently registered. The call is then routed from the SAN through an appropriate satellite link to the user terminal UT 1. Billing information is accumulated in the HLR_{SAT}.

As specific examples of the satellite service, a call made from telephone 7 can be routed to user terminal UT 1 having an IMSI A via PSTN 6, GW 1, SAN 1 and satellite 3a, or a call can be made from UT 2 with IMSI B to UT 1 via SAN 2, backbone network 5 and SAN 1.

A full duplex link is established via the satellite 3a, with the signal formats being generally in accordance with the GSM recommendations. Thus, duplex voice communication channels are provided together with the other signal formats supported by GSM, including the short message service (SMS) and unstructured supplementary service data (USSD). SMS is described in more detail in "The GSM System for Mobile Communications" by M. Mouly and M-B. Pautet, on page 56 and allows short text messages to be transmitted to a mobile user terminal to be displayed on its display, i.e. the display 25 shown in Figure 4. For further details of USSD, reference is directed to GSM Technical Specification GSM 02.90 November 1996, Version 5.0.0, published by ETSI, F-06291, Sophia Antipolis, Cedex, France. Briefly, USSD permits unstructured digital data messages to be transmitted between elements of a network operating according to the GSM protocol.

This form of service provision is attractive for users in remote locations where no PLMN exists.

### (c) Satellite service as an extension to existing IS-41 PLMN service

In this m ode of operation, the satellite service is used as a roamed network, so as to provide an extension to the coverage area provided by the IS-41 PLMN 9. As previously explained, in some circumstances, it may be desirable to use the satellite network in preference to the IS-41 network in order to make use of enhanced services not available through the IS-41 network, but which can be accessed through the satellite network. Also, the satellite network can be used in areas where there is no IS-41 service, thus permitting the dual mode handset UT 1 to be used throughout the world, in addition to the coverage area of the IS-41 network 9. For this mode of operation, the satellite network is treated as a roamed network for the PLMN 9 so that calls which are routed through satellite network are billed using the existing facilities of the PLMN 9.

For this mode of operation, the user terminal UT 1 is set for operation at the satellite frequency network, by operation of keypad 23 to select codec 29b and radio interface 30b, for communication via antenna 24b over the duplex link 1, 2 via satellite 3a. The user terminal UT 1 thus registers with one of the VLRs_{SAT} of the satellite network. In this example, it is assumed that it has registered with VLR1_{SAT} shown in Figure 2. This registration information is transferred to the IWF 32, where a record of the IMSI for UT 1 and its registration with VLR_{SAT} is stored. Also, as previously explained, the HLR_{IWF} contains a database of all IMSIs of user terminals which are permitted to interwork with the IS-41 network, together with their corresponding MINs. The registration information is transferred to the VLR_{IWF} shown in Figure 7 and communicated to the HLR of the IS-41 network 9 shown in Figure 2.

When an incoming call from telephone set 7 shown in Figure 1, is routed through PSTN 6, over line 18 (Figure 2) to the PLMN 9, it is initially directed to the HLR of PLMN 9 from which routing information is determined for routing the call over line 19, through the PSTN 6, to the gateway GW 1, and thence through SAN 1 and the duplex link 1, 2 via satellite 3a, to the user terminal UT 1.

### Authentication procedure

Different authentication procedures need to be used for these three different service provisions, in order to determine that the user terminal may be permitted to be registered with the networks, as will now be described in detail:

### a) Authentication for conventional PLMN service

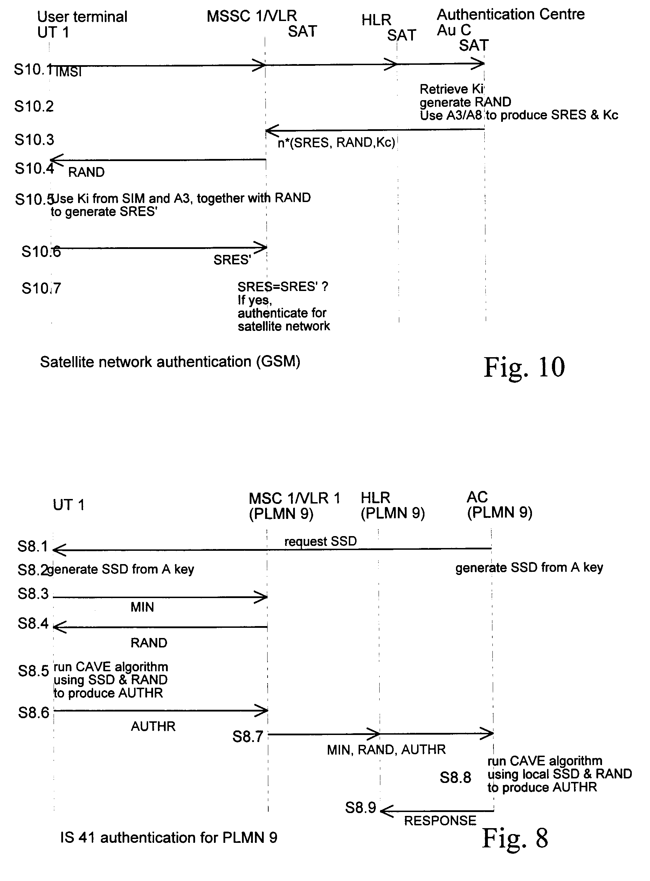

When service option (a) described above is selected, a conventional IS-41 authentication procedure is carried out prior to registering the user terminal 1 with VLR 1 of PLMN 9. This conventional authentication procedure will now be described with reference to Figure 8.

In response to an authentication request from user terminal UT 1, the authentication centre AC of PLMN 9 generates at step S8.1 a request for the user terminal UT 1 to generate shared secret data (SSD) in accordance with the conventional IS-41 protocol, the request being transmitted through the network in a conventional manner. As well known to those skilled in the art, the user terminal UT 1 stores a secret or A-key which is unique to the user terminal, together with its unique MIN. The A-key and the corresponding MIN are stored in the network in the secure authentication centre AC. A feature of the IS-41 SSD generation technique is that the A-key cannot be determined from the SSD by reverse engineering techniques.

As step S8.2, the SSD is generated from the A-key, both at the user terminal UT 1 and at the AC.

Then, at step S8.3, the MIN for user terminal UT 1 is transmitted through the network to MSC 1. Then, at step S8.4, a challenge in the form of a random number RAND is generated in MSC 1 and transmitted through the network to user terminal UT 1.

Both the user terminal UT 1 and the authentication centre AC hold a copy of the IS-41 CAVE algorithm. As known in the art, a CAVE algorithm operates the SSD and RAND as inputs to produce an authentication response AUTHR. At step S8.5, the CAVE algorithm is run using the locally generated SSD and the value of RAND received from MSC 1, to produce AUTHR, which is then transmitted to from user terminal UT 1 to MSC 1, step S8.6. Then, at step S8.7, the values of MIN, RAND and AUTHR are transmitted from MSC 1 via the HLR, to the authentication centre AC.

Then, at step S8.8, the CAVE algorithm is run locally at the AC using the locally generated SSD together with the receive value of RAND to produce AUTHR. The AUTHR produced at the AC is then compared with the AUTHR received from UT 1 at step S8.9 and a RESPONSE depending on the outcome, is transmitted to the HLR of PLMN 9. If both versions of AUTHR are the same, the RESPONSE indicates to the HLR that successful authentication has been achieved. However, if the AUTHRs are different, the HLR is instructed to bar registration of UT 1 with VLR 1.

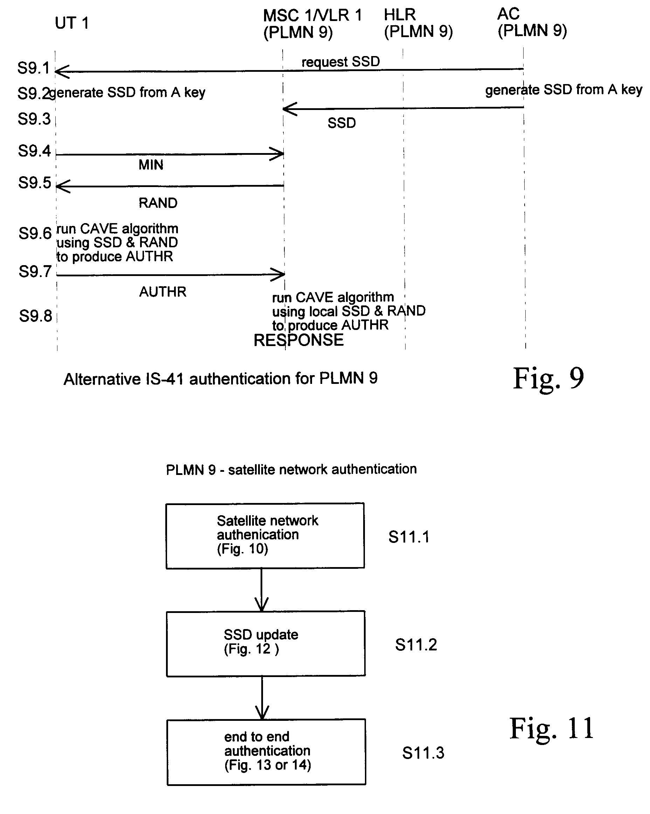

A modified authentication procedure is shown in Figure 9 in which the comparison of the two values of AUTHR is carried out at MSC 1. In this procedure, after transmission of the SSD request at step S9.1, the SSD generated at the AC is communicated to MSC 1. The authentication procedure then proceeds through steps S9.4 to S 9.7, which correspond to steps S8.3 to S8.6 in Figure 8. The CAVE algorithm is then run, at step S9.8, at the MSC 1, rather than at the AC as in Figure 8, to produce a value of AUTHR, which is compared with the value of AUTHR transmitted from handset UT 1 at step S9.7, in order to produce the response at step S9.9.

The modified procedure of Figure 9 has the advantage that it is not necessary to refer back to the AC for each authentication, due to the fact that the SSD has been transmitted to MSC1.

### b) Authentication for satellite service provision

When the service provision b) discussed above is used, authentication for user terminal UT 1 is carried out according to an authentication process shown in Figure 10.

As previously mentioned, the user terminal UT 1 includes a SIM smartcard which stores a unique IMSI, a unique identification function Ki and a GSM encryption algorithm A5, according to the GSM Recommendations (Figure 6). The registration and authentication procedure involves transmitting the IMSI to the GSM authentication centre AuC associated with the satellite network (Figure 3) and comparing data from the SIM with data from the authentication centre AuC at MSSC 1.

In a first step S10.1 shown in Figure 10, the IMSI is transmitted from UT 1 via MSSC 1, to the HLR_{SAT}, where it is routed to the authentication centre AuC. As previously mentioned, the authentication centre AuC includes a copy of the identification function Ki associated with each respective IMSI which is valid for use on the GSM network.

At step S10.2, the IMSI is checked in the memory of the AuC, and a corresponding value of Ki is retrieved. Also, a random number RAND is generated in the AuC using a random number generator (not shown). The random number RAND and the value of Ki are applied, in the AuC, as inputs to the GSM algorithm A3 to generate a signed result SRES. The AuC also includes the GSM algorithm A8 which generates a secret key Kc that is used for encryption/decryption of data transmitted over the air between the user terminal and the SAN. In practice, the algorithms A3/A8 may be constituted by a single algorithm producing a 96 bit output of which 32 bits constitute SRES and the remaining 64 bits constitute Kc.

At step S10.3, a triplet of signals comprising RAND, SRES and Kc is fed from the authentication centre AuC, through the HLR_{SAT} to MSSC 1. In practice, *n* triplets are supplied to MSSC 1 for use in subsequent authentications, for example during a call, but the processing of only one triplet will be considered herein in order to simplify the explanation.

At step S10.4, the individual value of RAND is transmitted on to the user terminal through the network from the MSSC. The SIM of the user terminal UT 1 stores the algorithm A3/A8 so that, at step S10.5, a corresponding value of SRES' is generated at the user terminal UT 1 from the received value of the random number RAND and the stored value of Ki in the SIM.

The value of SRES' is transmitted back at step S10.6 through the network to MSSC 1 and compared at step S10.7 with the originally generated value of SRES. If they are the same, the user terminal is authenticated but otherwise registration of the user terminal UT 1 with VLR_{SAT} 1 is barred.

If the authentication is successful, MSSC 1 initiates encryption/decryption of data transmitted over the network, using an algorithm referred to in the GSM Specifications as A5, which uses as its inputs, the secret key Kc and the frame number of data transmitted through the network.The SIM of the user terminal UT 1 generates its own value of the secret key Kc using its locally stored copy of the algorithm A8. The local value of Kc at the user terminal UT 1 can then be used to encrypt/decrypt data, using a locally held copy of the algorithm A5.

It will be understood that only essentially random numbers are transmitted over the air interface, which have no relation to one another, which minimises the risk of cloning or unauthenticated use.

Assuming that the authentication procedure is successful, calls can be routed to UT 1 through the satellite network according to service provision option (b) discussed above.

### c) Authentication for satellite service when use as a roamed extension to the IS-41 PLMN 9.

When the service provision option (c) discussed above, is used, i.e. when the satellite service is used as a roamed network for the IS-41 network 9, the service provider for the IS-41 network seeks secure, end-to-end authentication between the authentication centre AC of the network 9 and the user terminal UT 1 in order to provide assurance that the billing information provided from the satellite network to the PLMN 9 is accurate. However, the authentication procedures for the satellite network and the IS-41 network 9 are different, and incompatible. The present invention provides a solution to this problem and allows end-to-end authentication to be carried out between the user terminal and the authentication centre of the IS-41 network.

In accordance with the invention, IS-41 authentication signals that are transmitted between the user terminal UT 1 and the IS-41 network 9, through the satellite network, are encoded as GSM USSD and are communicated between the satellite network and the IS-41 network 9, through the interworking function IWF 32.

The overall scheme is shown in schematic form, in Figure 11. As a first stage, the user terminal UT 1 is authenticated for use with a satellite network in the manner described previously with reference to Figure 10. This is shown as step S11.1.

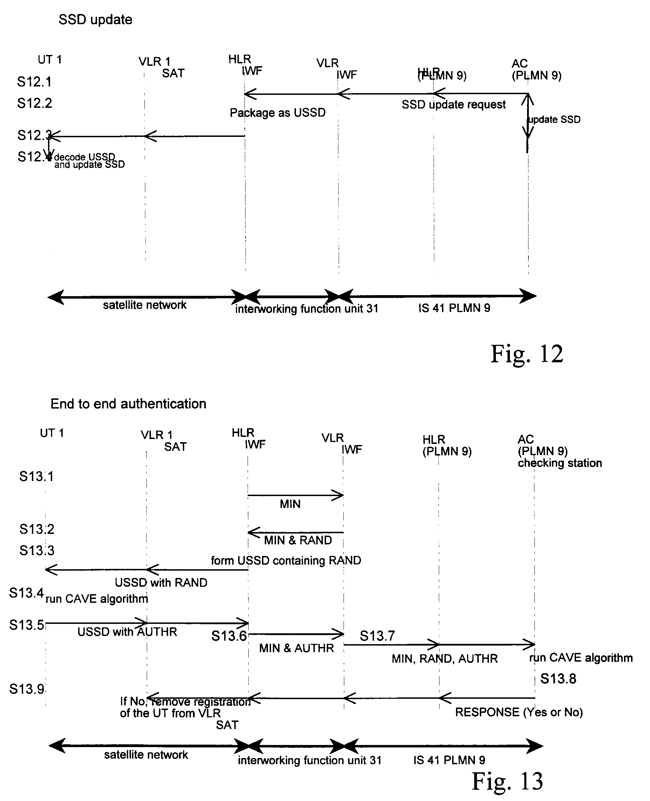

Thereafter, at step S11.2, the AC of the IS-41 network 9 instructs the user terminal UT 1 to perform an SSD update and a corresponding update is performed at the AC. This will be described in detail hereinafter, with reference to Figure 12.

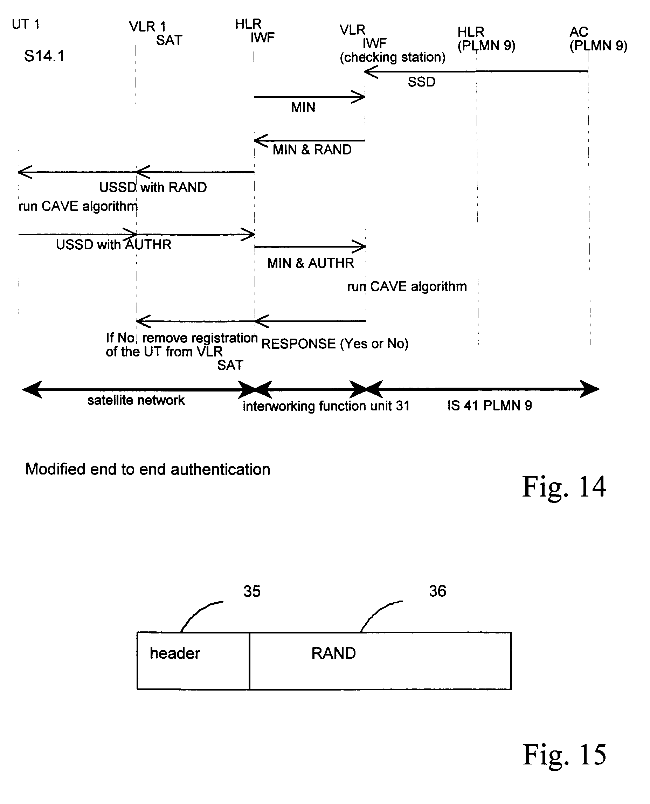

Then, at step S11.3, an end-to-end authentication is carried out as will be described in detail hereinafter with reference to Figure 13. A modification of the authentication process will also be described with reference to Figure 14.

### SSD update

Referring to Figure 12, in order to initiate the authentication process, the authentication centre AC, at step S12.1 sends a SSD update request through the IS-41 network 9 to the VLR_{IWF} of the IWF 32, and thence to the HLR_{IWF} (Figure 7). The update request is in respect of a specific MIN corresponding to the MIN of user terminal UT 1. The HLR_{IWF} from its database of MINs and IMSIs determines the corresponding IMSI for UT 1 and packages the update request as a USSD i.e. an unstructured message suitable for transmission according GSM protocol. The packaging is carried out at step S12.2.

At step S12.3, the USSD is transmitted over the satellite network to the user terminal UT 1 at step S12.4 is decoded by the controller 28 (Figure 6). The message is recognised as a request to update the SSD which is then carried out and the update is stored in the memory M 2 shown in Figure 5.

Also, at step S12.4, the SSD is updated at the AC in the IS-41 network 9.

### End-to-end Authentication

Referring now to Figure 13, end-to-end authentication is then carried out to ensure that the user terminal UT 1, when roaming from the IS-41 network 9 to the satellite network, can be validly registered with the VLR_{SAT} of the satellite network.

It will be recalled that during the initial satellite authentication procedure (step S11.1 in Figure 11 and Figure 10) the IMSI of UT 1 was communicated from the user terminal to the satellite network and the IMSI was registered in VLR 1_{SAT}. As part of this process, the IMSI is communicated to HLR_{IWF} of the IWF 32. It will also be recalled that the HLR_{IWF} contains a table of IMSIs and their corresponding MINs. Referring to Figure 13, at step S13.1, the MIN corresponding to the IMSI for UT 1 is transmitted from HLR_{IWF} to the VLR_{IWF}.

At step S13.2, the VLR_{IWF} produces a challenge in the form of a random number RAND according to conventional IS-41 protocol, and both RAND and MIN are transmitted back to the HLR_{IWF}. At step S13.3, the HLR_{IWF} determines the IMSI which corresponds to the MIN and forms a USSD containing the challenge RAND, which is then transmitted over the satellite network according to GSM protocol, to the user terminal UT 1. The format of the USSD is shown in more detail in Figure 15 and consists of a header portion 35 and a message portion 36. The controller 28 of the user terminal UT 1 (Figure 6) recognises the header portion 35 as being a challenge, and it takes the challenge as an instruction to run the CAVE algorithm as shown at step S13.4. The CAVE algorithm uses as its inputs the MIN stored in the NAM 31 of UT 1 shown in Figure 5, together the updated SSD stored in memory M 2 of UT 1, produced as a result of the update process described with reference to Figure 12, at step S12.3.

AUTHR is produced as a result of running the CAVE algorithm, and at step S13.5, the UT 1 packages a USSD, in GSM format, to include AUTHR, which is then transmitted over the satellite network to the HLR_{IWF}.

At step S13.6, the USSD with AUTHR is unwrapped and the MIN, held at the HLR_{IWF} together with AUTHR, is transmitted to the VLR_{IWF} where the initial value of the challenge RAND, is collected and the triplet of signals, MIN, RAND and AUTHR, are transmitted in IS-41 format through the PLMN 9 to the authentication centre AC.

Then, at step S13.8, the CAVE algorithm is run locally at the AC. The CAVE algorithm uses as its inputs the updated SSD, together with RAND as transmitted thereto at step S13.7. The locally produced value of AUTHR is then compared with the value transmitted to the AC at step S13.7, from UT 1. At step S13.9, a signal RESPONSE is produced depending on the outcome of the comparison of the two authorization response AUTHR. If they are the same, successful authentication has been achieved. In this situation, user terminal UT 1 is permitted to register with the satellite network in VLR 1_{SAT}. Otherwise, the registration of the UT 1 is removed from VLR_{SAT}.

From the foregoing, it will be seen that the authentication centre AC operates as a checking station to compare the authentication responses produced by UT 1 and the AC. In a modification shown in Figure 14, the VLR_{IWF} can perform the function of the checking station. In this procedure, the initially produced SSD is transmitted at step 14.1 from the AC to the VLR_{IWF} which, in a similar manner to the modification described with reference to Figure 9, avoids the need to transmit signals back and forth between the AC for successive authentications.

Many other modifications fall within the scope of the invention. For example, whilst the invention is described in relation to the ICO™ satellite network, other satellite networks could be used, e.g. of the types discussed hereinbefore, with different satellite constellation and signal transmission protocols.

Also, the invention can be used to provide authentication for a IS-41 user terminal which roams to a GSM land based network, rather than roaming to a satellite network as previously described.

Also, whilst the signal communication on the paths 1, 2 utilises a TDMA access protocol, others could be used, such as code division multiple access (CDMA) or frequency division multiple access (FDMA).

Although for the sake of convenient explanation, the term "mobile" has been used to denote the user terminals UT, it should be understood that this term is not restricted to hand-held or hand portable terminals, but includes, for example, terminals to be mounted on marine vessels or aircraft, or in terrestrial vehicles. Also, it is possible to practice the invention with some of the terminals being completely or at least partially immobile.

It will be understood that various components of the described examples of the invention may be located in different national jurisdictions. For the avoidance of doubt, the present invention extends to any part of component of the telecommunications apparatus or systems, which contributes to the inventive concept.

## Claims

1. A method of authenticating a user terminal which has roamed from a first network that uses a first authentication protocol, to a second network that uses a second, different authentication protocol, comprising:
transmitting an authentication challenge to the user terminal according to the protocol of the first network, through the second network,
providing a response at the user terminal to the challenge in accordance with the first authentication protocol,
transmitting the response through the second network, to a checking station, and
comparing the response at the checking station with corresponding authentication data for the first network according to the first protocol so as to authenticate the user terminal according to the first protocol for use with the first network.

2. A method according to claim 1 wherein the authentication challenge is transmitted to the user terminal through the second network, packaged as a message in a data format pertinent to the second network.

3. A method according to claim 3 wherein the first network is configured in accordance with IS-41 recommendations, and the second network is configured in accordance with GSM recommendations.

4. A method according to claim 4 including packaging the challenge and the response as a USSD or SMS.

5. A method according to any preceding claim including authenticating the roamed user terminal for use with said second network in accordance with the second protocol, and only authenticating the terminal in accordance with the first protocol if the authentication according to the second protocol is successful.

6. A method according to claim 5 including:
transmitting an initial authentication challenge to the user terminal according to the protocol of the second network, through the second network,
providing a response at the user terminal to the challenge according to a predetermined algorithm in accordance with the second authentication protocol,
transmitting the response through the second network to a checking station for the second network, and
comparing the response at the checking station for the second network with authentication data according to the second protocol to authenticate the user terminal for use with the second network.

7. A method according to any preceding claim wherein the second network is a satellite network.

8. A method of authenticating a user terminal which has roamed from a first network that uses a first authentication protocol, to a second network that uses a second, different authentication protocol, comprising:
receiving an authentication challenge at the user terminal according to the protocol of the first network, transmitted thereto through the second network,
providing a response at the user terminal to the challenge in accordance with the first authentication protocol,
transmitting the response at the user terminal using the second network, towards a checking station whereby to permit the response to be compared with corresponding authentication data for the first network according to the first protocol so as to authenticate the user terminal according to the first protocol for use with the first network.

9. A method according to claim 8 including:
receiving an authentication challenge at the user terminal according to the protocol of the second network, transmitted thereto through the second network,
providing a response at the user terminal to the challenge in accordance with the second authentication protocol,
transmitting the response at the user terminal using the second network, towards a checking station whereby to permit the response to be compared with corresponding authentication data for the second network according to the second protocol so as to authenticate the user terminal according to the second protocol for use with the second network.

10. A user terminal for roaming from a first network that uses a first authentication protocol, to a second network that uses a second, different authentication protocol, comprising:
a receiver to receive an authentication challenge according to the protocol of the first network, through the second network,
means operative to provide a response to the challenge in accordance with the first authentication protocol,
and a transmitter operative to transmit the response through the second network, for permitting the response to be compared at a remote checking station with corresponding authentication data for the first network according to the first protocol, for authenticating the user terminal according to the first protocol, for use with the first network.

11. A user terminal according to claim 10 including:
a receiver to receive an authentication challenge according to the protocol of the second network, through the second network,
means operative to provide a response to the challenge in accordance with the second authentication protocol,
and a transmitter operative to transmit the response through the second network, for permitting the response to be compared at a remote checking station with corresponding authentication data for the second network according to the second protocol, for authenticating the user terminal according to the second protocol, for use with the second network

12. A user terminal operative according to GSM recommendations and IS-41 recommendations, and responsive to an IS-41 challenge packaged as a USSD or SMS, to produce a IS-41 response, transmitted as a SMS or USSD.

13. An interworking function unit for providing interworking between a first and second telecommunications networks operative according to a first and second different sets of recommendations with respective first and second authentication protocols, for use in authenticating a user terminal which has roamed from the first network to the second network, comprising:
means for routing an authentication challenge according to the protocol of the first network, towards a user terminal, through the second network,
means to receive from the user terminal, through the second network, a response to the challenge in accordance with the first authentication protocol, and
means for routing the response in a format in accordance with the recommendations for the first network, towards a checking station at which it is compared with corresponding authentication data for the first network according to the first protocol so as to authenticate the user terminal for use with the first network.

14. An interworking unit according to claim 13 and including the checking station.

15. An interworking unit according to claim 13 and coupled to the first network, said checking station being in the first network.

16. An interworking unit according to claim 13, 14, or 15 operative to direct the authentication challenge towards the user terminal through the second network, packaged as a message in a data format pertinent to the second network.

17. An interworking unit according to claim 16 wherein the first network is configured in accordance with IS-41 recommendations, and the second network is configured in accordance with GSM recommendations.

18. An interworking unit according to claim 17 including means for packaging the challenge and the response as a USSD or SMS.

19. A system for authenticating a user terminal which has roamed from a first network that uses a first authentication protocol, to a second network that uses a second, different authentication protocol, comprising:
means operative to transmit an authentication challenge to the user terminal according to the protocol of the first network, transmitted thereto through the second network,
means for providing a response at the user terminal to the challenge in accordance with the first authentication protocol,
means for transmitting the response through the second network, to a checking station, and
means for comparing the response at the checking station with corresponding authentication data for the first network according to the first protocol so as to authenticate the user terminal according to the first protocol for use with the first network.
